# EUROPEAN PATENT APPLICATION

(11) **EP 3 437 498 A1**
(43) Date of publication of application: **06.02.2019**
(21) Application number: 16896020.1
(22) Date of filing: 31.03.2016
(51) Int. Cl.: A41D 13/00, A41D 31/00, A63B 71/06

(54) **SMART GARMENT AND CONTROL METHOD FOR SMART GARMENT**

(71) Applicant: Shenzhen Royole Technologies Co., Ltd., Shenzhen, Guangdong 518052 (CN)
(72) Inventor: YANG, Fan, Shenzhen Guangdong 518052 (CN); JIANG, Chao, Shenzhen Guangdong 518052 (CN)
(74) Representative: Hamer, Christopher K.
(86) International application number: PCT/CN2016/078202
(87) International publication number: WO 2017/166240

(57) **Abstract**

A smart garment and a control method of a smart garment are provided. The smart garment includes a control module, a flexible sensor, and a flexible display. The flexible sensor and the flexible display are both electrically connected with the control module. When the flexible sensor detects a touch signal, the control module controls the flexible display to indicate a touch location corresponding to the touch signal. In this way, hit locations can be accurately displayed and the wearing experience can be improved.

## Description

### TECHNICAL FIELD

The present disclosure relates to the field of smart wearables, and more particularly to a smart garment and a control method thereof.

### BACKGROUND

Fencing, as a sport, can exercise people's thinking ability and adaptability, and can facilitate the development of the excellent psychological quality of the people. During the competition, both sides wear a fencing garment, and each side uses the tip of a sword to stab body parts of an opponent and to make the tip of the sword reach an effective part. In the end, one with the less number of times of effective parts stabbed and the more scores will be the winner. At present, fencing competitions generally adopt the rule of combining artificial referee and electronic referee, where the electronic referee is dominant. The fencer wears a metal vest to protect effective parts. When the metal vest is hit, the electronic referee turns a color light on; while a white light will be turned on when an invalid part is hit. However, metal vests are generally heavy and have poor flexibility, which is not conducive to the wear of fencers and the better play of their own level; further specific hit positions cannot be accurately located, resulting in a misjudgment.

### SUMMARY

A smart garment and a control method of a smart garment are provided, to accurately display a hit position and improve wearing experience.

The smart garment is provided, which includes a control module, a flexible sensor, and a flexible display. The flexible sensor and the flexible display are both electrically connected with the control module. The control module is configured to control the flexible display to indicate a touch location corresponding to a touch signal when the flexible sensor detects the touch signal.

A control method of a smart garment is provided. The method includes the following. A touch signal applied to a flexible sensor of the smart garment is detected. A flexible display of the smart garment is controlled to indicate a touch location corresponding to the touch signal.

According to implementations of the disclosure, the smart garment includes the control module, the flexible sensor, and the flexible display. The flexible sensor and the flexible display are both electrically connected with the control module. The control module is configured to control the flexible display to indicate the touch location corresponding to the touch signal when the flexible sensor detects the touch signal. In this way, hit locations can be accurately displayed and the wearing experience can be improved.

### BRIEF DESCRIPTION OF THE DRAWINGS

To illustrate the technical solutions embodied by the embodiments of the present disclosure more clearly, the following briefly introduces the accompanying drawings required for describing the embodiments. Apparently, the accompanying drawings in the following description merely illustrate some embodiments of the present disclosure. Those of ordinary skill in the art may also obtain other drawings based on these accompanying drawings without creative efforts.
FIG. 1 is a first schematic structural view illustrating a smart garment according to an implementation of the disclosure.
FIG. 2 is a second schematic structural view illustrating a smart garment according to an implementation of the disclosure.
FIG. 3 is a schematic view illustrating a smart garment according to an implementation of the disclosure.
FIG. 4 is a schematic flow diagram illustrating a control method of a smart garment according to an implementation of the disclosure.

### DETAILED DESCRIPTION OF ILLUSTRATED EMBODIMENTS

Hereinafter, technical solutions embodied in embodiments of the disclosure will be described in a clear and comprehensive manner in conjunction with the accompanying drawings. It is evident that the embodiments described herein are merely some rather than all of the embodiments of the disclosure. Those of ordinary skill in the art will be able to derive other embodiments based on these embodiments without creative work, and all such derived embodiments shall fall in the protection scope of the disclosure.

A smart garment and a control method of a smart garment are provided, to accurately display a hit location and improve wearing experience. The following are described in detail.

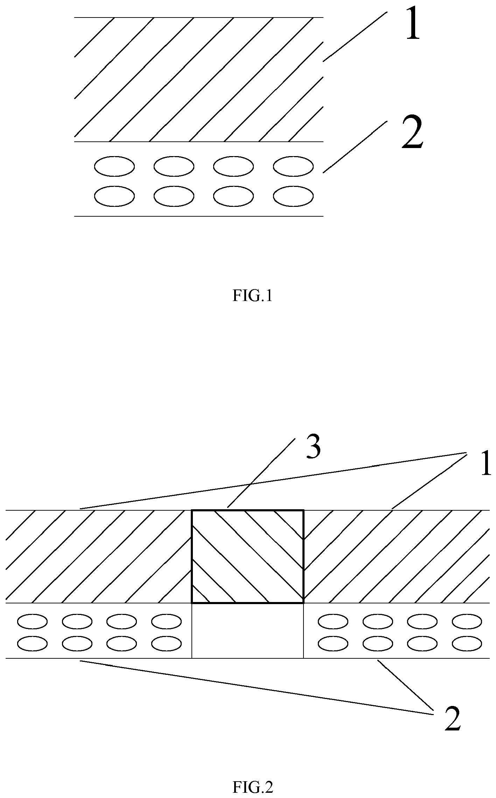

Referring to FIG. 1, FIG. 1 is a first schematic structural view illustrating a smart garment according to an implementation of the disclosure. In this implementation, the smart garment includes a control module, a flexible sensor 1, and a flexible display 2. The flexible sensor 1 and the flexible display 2 are both electrically connected with the control module.

The flexible sensor 1 and the flexible display 2 are both made of transparent materials. The flexible sensor 1 is located outside the flexible display 2 and configured to detect a touch signal when the smart garment is hit by an object. The flexible display 2 can be a flexible light emitting diode (LED) and configured to output an optical signal to indicate a touch location (that is, a location where the smart garment is hit) corresponding to the touch signal. The flexible display 2 may also be a flexible organic light-emitting diode (OLED), whose higher resolution can be more beneficial to accurately display a touch location. For another example, the flexible display 2 may also be made of a non-transparent material, and which material is used to make the flexible display 2 that depends on actual needs.

The control module can be set on the back or waist of the smart garment and the embodiments of the disclosure are not limited thereto.

The control module is configured to control the flexible display 2 to indicate a touch location corresponding to a touch signal when the flexible sensor 1 detects the touch signal.

Specifically, the flexible sensor 1 and the flexible display 2 may be continuously arranged on an outer surface of the smart garment; that is, the flexible sensor 1 and the flexible display 2 are designed as a one-piece structure. Since the flexible sensor 1 and the flexible display 2 are light in weight and are both made of flexible materials, the flexible sensor 1 and the flexible display 2 can be attached to the outer surface of the smart garment, which does not affect the appearance of the smart garment and allows the wearer to easily access the smart garment for donning.

In one implementation, the smart garment is a fencing garment and the touch signal is generated when the flexible sensor 1 is hit by the tip of the sword.

In one implementation, the flexible sensor 1 and the flexible display 2 can also be designed as a block-to-block connection instead of a one-piece structure. As illustrated in FIG. 2, in some preset locations of the smart garment such as locations with a larger amplitude of deformation, the sensors are generally most easily to be damaged, and therefore the flexible sensor 1 and the flexible display 2 may be connected together in a splicing manner in these preset locations. The splicing locations are the above-mentioned preset locations. A connection sensor 3 is disposed at the splicing location and configured to connect the flexible sensor 1 and the flexible display 2 adjacent to the flexible sensor 1. The connection sensor 3 is electrically connected with the control module. Specifically, the connection sensor 3 may be a flexible sensor 1 or a pressure sensor. Since the flexible display 2 has a weak bending resistance, the flexible display 2 may not be disposed at the splicing location. When the splicing location (that is, the connection sensor 3) is hit, the control module can control at least two flexible displays 2 adjacent to the connection sensor 3 to collectively indicate the splicing location hit at this time, which can effectively prevent from generating a sensing blind area at the splicing location and can achieve indicating effect at the same time. For example, the flexible displays 2 on the left and right sides of the connection sensor 3 may respectively display a half of pattern (such as, a semicircle-shape pattern). Since the splicing location is generally narrow, the two half of patterns still form a near-complete pattern without obvious seams when viewed from a distance. In addition, the connection sensor 3 may only connect the adjacent flexible sensors 1. While the adjacent flexible displays 2 may be connected by a support. The support is located under the connection sensor 3 to support the connection sensor 3.

In one implementation, during the competition, the smart garment has an amplitude of deformation at the splicing location greater than that at a non-splicing location.

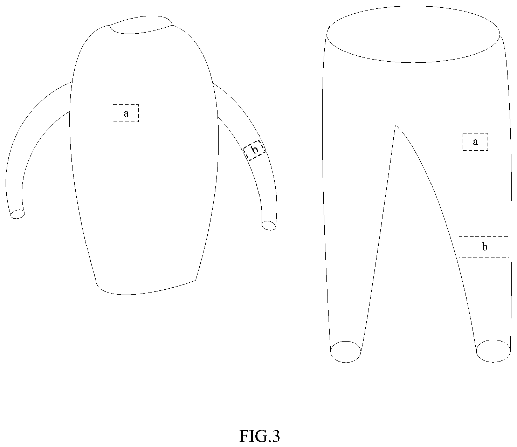

As illustrated in FIG. 3, the smart garment has a relatively large amplitude of deformation at locations b (such as on the back of elbows, at knees, etc.), the large deformations occur at these locations frequently, and therefore the smart garment can be designed as the structure illustrated in FIG. 2 at these locations; that is, the splicing structures can be adopted at these locations. While at some other locations a (including most locations of the smart garment), the smart garment has a relatively small amplitude of the deformation, and therefore at these locations, the smart garment can be designed as the structure illustrated in FIG. 1.

In some possible implementations, the smart garment includes a helmet. The helmet is provided with a flexible sensor 1 and a flexible display 2, which can be designed as the structure illustrated in FIG. 1. For another example, the structures illustrated in FIG. 1 and FIG. 2 can be combined to design the helmet. For the flexible display 2 at a face location of the helmet, since the flexible display 2 will affect a user when lighting, it may be considered that the flexible display 2 can be designed to be out of sight from the user; for example, the flexible display 2 can be designed at a location, such as at an ear, the top of the head, and so on. When the flexible sensor 1 at the face location of the user is hit, the control module controls the flexible display 2 at the ear and the top of the head to emit light for indicating, while the control module sends a location, which is the actual location where the flexible sensor 1 is hit, to electronic equipment used by the referee, so that the accuracy of result can be guaranteed without affecting normal use of the user.

In some possible implementations, considering that the flexible sensor 1, the flexible display 2, and the connection sensor 3 are relatively fragile and are easily damaged, a transparent plate may be disposed outside the flexible sensor 1, but the transparent plate can be bent and has a very high hardness; for example, the transparent plate may be PVC or the like.

In some possible implementations, the smart garment further includes a motion sensor for the daily training. The motion sensor is electrically connected with the control module. For example, the smart garment is a fencing garment. In the training of fencers A and B, the motion sensor detects motion data of the fencer A. The control module determines a current motion of the fencer A according to the motion data of the fencer A, calculates at least one exemplary striking point for the opponent B, and then controls the flexible display 2 to emit light at the at least one exemplary striking point so as to indicate it for the fencer B; then the fencer B may select the best one striking point from the at least one striking point to strike the fencer A. Similarly, the fencing garment worn by the fencer B can also prompt at least one striking point that is better for the opponent A when the fencer B performs a motion to the fencer A, so as to achieve an intuitive and effective training effect, which is helpful to rapidly promote the fencing level.

According to the implementations of the disclosure, the smart garment includes the control module, the flexible sensor, and the flexible display. The flexible sensor and the flexible display are both electrically connected with the control module. When the flexible sensor detects the touch signal, the control module controls the flexible display to indicate the touch location corresponding to the touch signal. In this way, hit locations can be accurately displayed and the wearing experience can be improved.

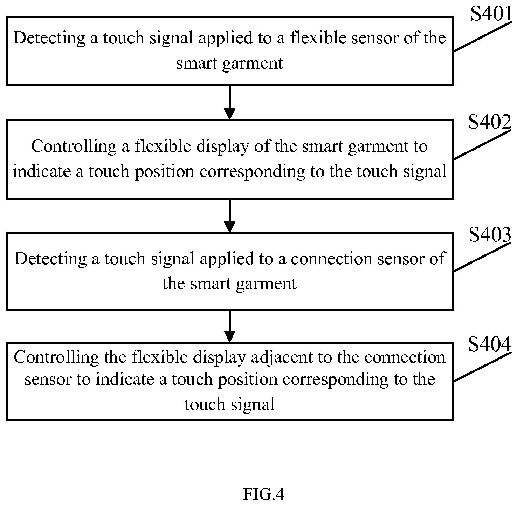

Referring to FIG. 4, FIG. 4 is a schematic flow diagram illustrating a control method of a smart garment. The control method begins at S401.

At S401, a touch signal applied to a flexible sensor of the smart garment is detected.

At S402, a flexible display of the smart garment is controlled to indicate a touch location corresponding to the touch signal.

The flexible sensor 1 and the flexible display 2 are both made of transparent materials; or the flexible sensor 1 is made of a transparent material and the flexible display 2 is made of a non-transparent material. The flexible sensor 1 is located outside of the flexible display 2 and is configured to detect a touch signal when the flexible sensor 1 is hit. The flexible display 2 can be a flexible LED or a flexible OLED and is configured to output an optical signal to indicate the touch location (that is a location where the smart garment is hit) corresponding to the touch signal.

At S403, a touch signal applied to a connection sensor of the smart garment is detected.

At S404, the flexible display adjacent to the connection sensor is controlled to indicate a touch location corresponding to the touch signal.

In one implementation, the connection sensor is connected with adjacent flexible sensors.

In one implementation, the connection sensor is located at a first location of the smart garment, the flexible sensor is located at a second location of the smart garment, and the smart garment has an amplitude of deformation at the first location greater than that at the second location during the fencing game.

Further, a touch signal applied to a flexible sensor of a helmet of the smart garment is detected. A flexible display of the helmet is controlled to indicate a touch signal and a touch location corresponding to the touch signal is sent to electronic equipment connected with the smart garment.

In one implementation, the location corresponding to the touch signal indicated by the flexible display is out of sight from a wearer wearing the helmet.

Further, motion data of a user is detected by a motion sensor of the smart garment. A motion of the user is determined according to the motion data and the flexible display of the smart garment is controlled to indicate a hit point according to the motion of the user.

In one implementation, the smart garment is a fencing garment. The touch signal is generated when the flexible sensor is hit. In addition, the combination of the flexible display and the flexible sensor to indicate the hit location can also be used for other smart garments, such as entertainment garments, boxing garments, contest garments, and the like.

Further, the flexible display of the smart garment is controlled to indicate the touch location corresponding to the touch signal as follows. The flexible display is controlled to display different colors according to different strength of the touch signal.

According to the implementations of the disclosure, the touch signal applied to the flexible sensor of the smart garment is detected. The flexible display of the smart garment is controlled to indicate the touch location corresponding to the touch signal. In addition, the touch signal applied to the connection sensor of the smart garment is detected. The flexible display adjacent to the connection sensor is controlled to indicate the touch location corresponding to the touch signal. Therefore, hit locations can be accurately displayed and the wearing experience can be improved.

The smart garment and the control method of the smart garment provided in the embodiments of the present disclosure have been described above in detail. Specific examples are used in this application to explain the principle and implementations of the present application. The above embodiments are only used to help understand the core idea of the present application; at the same time, those skilled in the art can make changes in the specific implementations and the application scope according to the idea of the present application. In summary, the contents of the present specification should not be construed as limitations of the application.

## Claims

1. A smart garment, comprising:
a control module;
a flexible sensor, electrically connected with the control module; and
a flexible display, electrically connected with the control module;
the control module being configured to control the flexible display to indicate a touch location corresponding to a touch signal when the flexible sensor detects the touch signal.

2. The smart garment of claim 1, wherein a plurality of flexible sensors and a plurality of flexible displays are spliced on an outer surface of the smart garment, a splicing location is set to a preset location of the smart garment, and a connection sensor is disposed at the splicing location;
wherein the control module is further configured to control the flexible display adjacent to the connection sensor to indicate a touch location corresponding to a touch signal when the connection sensor detects the touch signal.

3. The smart garment of claim 2, wherein the connection sensor is a flexible sensor or a pressure sensor.

4. The smart garment of claim 2, wherein the smart garment has an amplitude of deformation at the splicing location greater than that at a non-splicing location when the smart garment is in use.

5. The smart garment of any of claims 1 to 4, comprising a helmet, wherein the helmet comprises a flexible sensor and a flexible display that are both electrically connected with the control module;
the control module being further configured to control the flexible display of the helmet to indicate a touch signal when the flexible sensor of the helmet detects the touch signal.

6. The smart garment of claim 5, wherein the control module is further configured to:
send a touch location corresponding to the touch signal to electronic equipment connected to the smart garment when the flexible sensor of the helmet detects the touch signal.

7. The smart garment of claim 5, wherein the location corresponding to the touch signal indicated by the flexible display is out of sight from a wearer wearing the helmet.

8. The smart garment of any of claims 1 to , further comprising a transparent plate disposed outside the flexible sensor and the flexible display.

9. The smart garment of any of claims 1 to 4, further comprising a motion sensor electrically connected with the control module;
the motion sensor being configured to detect motion data of a user; and
the control module being further configured to determine a motion of the user according to the motion data and control the flexible display to indicate a hit point according to the motion of the user.

10. The smart garment of claim 7, wherein the smart garment is a fencing garment and the touch signal is generated when the flexible sensor is hit.

11. A control method of a smart garment, comprising:
detecting a touch signal applied to a flexible sensor of the smart garment; and
controlling a flexible display of the smart garment to indicate a touch location corresponding to the touch signal.

12. The method of claim 11, further comprising:
detecting a touch signal applied to a connection sensor of the smart garment; and
controlling the flexible display adjacent to the connection sensor to indicate a touch location corresponding to the touch signal.

13. The method of claim 12, wherein the connection sensor is connected with adjacent flexible sensors.

14. The method of claim 13, wherein the connection sensor is located at a first location of the smart garment, the flexible sensor is located at a second location of the smart garment, and the smart garment has an amplitude of deformation at the first location greater than that at the second location when in use.

15. The method of any of claims 11 to 14, further comprising:
detecting a touch signal applied to a flexible sensor of a helmet of the smart garment; and
controlling a flexible display of the helmet to indicate a touch signal and sending a touch location corresponding to the touch signal to electronic equipment connected with the smart garment.

16. The method of claim 15, wherein the location corresponding to the touch signal indicated by the flexible display is out of sight from a wearer wearing the helmet.

17. The method of any of claims 11 to 14, further comprising:
detecting motion data of a user by a motion sensor of the smart garment; and
determining a motion of the user according to the motion data and controlling the flexible display of the smart garment to indicate a hit point according to the motion of the user.

18. The method of any of claims 11 to 14, wherein the smart garment is a fencing garment and the touch signal is generated when the flexible sensor is hit.

19. The method of any of claims 11 to 14, wherein the controlling the flexible display of the smart garment to indicate a touch location corresponding to the touch signal comprising:
controlling the flexible display to display different colors according to different strength of the touch signal.
